# EUROPEAN PATENT SPECIFICATION

(11) **EP 3 069 925 B1**
(45) Date of publication and mention of the grant of the patent: **09.05.2018**
(21) Application number: 16160607.4
(22) Date of filing: 16.03.2016
(51) Int. Cl.: B60P 1/28, B60P 1/54, B62D 21/15

(54) **LORRY WITH SUBFRAME**
LASTKRAFTWAGEN MIT HILFSRAHMEN
CAMION AVEC SOUS-CHÂSSIS

(30) Priority: 20.03.2015 SE 1550337
(43) Date of publication of application: 21.09.2016
(73) Proprietor: Cargotec Patenter AB, 341 81 Ljungby (SE)
(72) Inventor: Saenz de Inestrillas Garcia, Victor, ES-50016 Zaragoza (ES); Ferrer Morancho, Joaquin, ES-50016 Zaragoza (ES)
(74) Representative: Bjerkéns Patentbyrå KB (Gävle)

(56) References cited:
- DE-A1-102009 047 458
- DE-U1- 29 800 368

## Description

### FIELD OF THE INVENTION AND PRIOR ART

The present invention relates to a lorry according to the preamble of claim 1 and disclosed in DE 10 2009 047 458 A1. A lorry is normally provided with a lorry platform or other superstructure which is configured to receive the load, for instance in the form of bulk or goods, to be carried by the lorry and which is mounted to and supported by a subframe, wherein the subframe in its turn is mounted to and supported by the chassis of the lorry. Other equipment, such as for instance a loader crane or a MEWP platform (MEWP = Mobile Elevating Work Platform), may also be mounted to the subframe. When the subframe carries a big loader crane or MEWP platform, the subframe may be subjected to very high bending moments caused by the crane/platform when it is in operation. These bending moments are to be taken up jointly by the subframe and the chassis.

It is previously known to secure the subframe to the chassis of the lorry by means of shear-yielding connecting elements which are configured to form a flexible connection between the subframe and the chassis and allow them to move somewhat in relation to each other in the longitudinal direction at the interface between them when subjected to bending moments from the load acting on the subframe. The subframe and the chassis will thereby behave as separate elements when subjected to such bending moments, which in its turn is advantageous with respect to the distribution of the stresses in the subframe and the chassis. However, if the subframe and the chassis are allowed to separate from each other vertically when the subframe is subjected to high bending moments from the load acting on the subframe, the subframe will take up all the bending moments whereas the chassis will remain essentially unloaded. In such a case, the subframe might be subjected to detrimentally high stresses. In order to make sure that the chassis properly contributes in taking up the bending moments from the load acting on the subframe and thereby avoid too high stresses in the subframe, it is important that the lower surface of the subframe always remains in contact with the upper surface of the chassis when the subframe is subjected to bending moments. The shear-yielding connecting elements between the subframe and the chassis should therefore be configured to prevent the subframe and the chassis from moving vertically in relation to each other and consequently force them to bend jointly with the same shape of deformation, and at the same time allow them to move somewhat in relation to each other in the longitudinal direction, when the subframe is subjected to bending moments from the load acting on the subframe.

If the subframe is rigidly and non-yieldingly connected to the chassis and carries a big and heavy loader crane, the vehicle might get too stiff and some of the wheels of the vehicle may as a consequence thereof loose contact with the ground when driving on uneven ground, for instance on a narrow and bumpy road in the mountains. A flexible connection between the subframe and the chassis will make it easier for the chassis to flex when driving on uneven ground and thereby make it easier for the wheels of the vehicle to remain in contact with the ground.

### OBJECT OF THE INVENTION

The object of the present invention is to provide a new and favourable manner of securing a subframe to the chassis of a lorry.

### SUMMARY OF THE INVENTION

According to the present invention, the above-mentioned object is achieved by a lorry having the features defined in claim 1.

The lorry of the present invention comprises a chassis and a subframe mounted to the chassis by means of several shear-yielding connecting elements which are arranged on either side of a longitudinal centre axis of the subframe and configured to form a flexible connection between the subframe and the chassis, wherein the subframe has a bottom surface which rests against an upper surface of the chassis, and wherein the lorry is characterized in:
- that each one of said connecting elements comprises an attachment plate, which is rigidly fixed to the subframe and overlaps a part of a vertical and longitudinal side wall of the chassis, wherein the attachment plate is provided with at least one elongated slide slot and an associated sliding member received therein, the slide slot extending in the longitudinal direction of the subframe;
- that said sliding member is shorter than the associated slide slot as seen in the longitudinal direction of the slide slot, to thereby allow a relative movement between the sliding member and the slide slot in the longitudinal direction of the slide slot;
- that said sliding member is fixed to the chassis by means of at least one bolt, which has a bolt shaft extending through a non-threaded bolt hole in the sliding member and through a corresponding non-threaded bolt hole in the chassis; and
- that a longitudinal planar contact surface is provided on a lower longitudinal edge of said sliding member, wherein this contact surface faces and is in sliding contact with a corresponding longitudinal planar contact surface on a lower longitudinal edge of the associated slide slot, to thereby allow the subframe to slide longitudinally in relation to the chassis and at the same time prevent a relative movement between the subframe and the chassis vertically so as to keep the bottom surface of the subframe in contact with the upper surface of the chassis.

With shear-yielding connecting elements of the above-mentioned type, the transfer of vertical forces between the subframe and the chassis required for forcing the subframe and the chassis to bend jointly with the same shape of deformation takes place in a first step between the subframe and the sliding members of the connecting elements via the attachment plates and in a second step between the sliding members and the chassis via the bolts. In said first step, the vertical forces are transferred through planar contact surfaces on the attachment plates and corresponding planar contact surfaces on the sliding members. In said second step, the vertical forces are transferred through external cylindrical contact surfaces on the bolt shafts and corresponding internal cylindrical contact surfaces in the bolt holes of the sliding members and the chassis, respectively. It is hereby possible to avoid a transfer of vertical forces through a contact point of very small contact area between a planar contact surface and a rounded contact surface, and all contact stresses can therefore be kept at an acceptably low level. Thus, the connecting elements are capable of transferring vertical forces between the subframe and the chassis in an efficient and safe manner when the subframe is subjected to bending moments. The connecting elements will at the same time allow a mutual displacement between the subframe and the chassis in the longitudinal direction through the planar contact surfaces on the attachment plates and the corresponding planar contact surfaces on the sliding members, and thereby ensure a favourable distribution of the stresses in the subframe and the chassis when the subframe is subjected to bending moments. A further advantage with the above-mentioned connecting elements is that they have a rather simple construction and may be produced and mounted in a simple and cost-efficient manner.

According to an embodiment of the invention, said sliding member has a thickness which is larger than the thickness of said attachment plate. Hereby, the sliding member can be clamped between the bolt head and the adjacent side wall of the chassis at the same time as the sliding member keeps the bolt head at a distance from the attachment plate and thereby prevents the attachment plate from being clamped between the bolt head and the adjacent side wall of the chassis.

Further advantages as well as advantageous features of the lorry according to the present invention will appear from the description following below and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic perspective view of a part of a lorry according to an embodiment of the present invention with a loader crane mounted to the chassis of the lorry through a subframe,
- Fig 2: is a detail enlargement of a connecting element shown in the encircled area II in Fig 1,
- Fig 3: is a detail enlargement of another connecting element shown in the encircled area III in Fig 1,
- Fig 4: is a lateral view of the connecting element of Fig 2,
- Fig 5: is a cut according to the line V-V in Fig 4,
- Fig 6: is a perspective view of the connecting element of Fig 2, with some of the components of the connecting element shown in a separated state,
- Fig 7: is a detail enlargement of a slot shown in the encircled area VII in Fig 4, with a bolt shaft of a bolt shown in cross-section and with a sliding member received in the slot,
- Fig 8: is a lateral view of the connecting element of Fig 3,
- Fig 9: is a perspective view from a first direction of the connecting element of Fig 3, with some of the components of the connecting element shown in a separated state,
- Fig 10: is an perspective view from another direction of the connecting element of Fig 3, with some of the components of the connecting element shown in a separated state, and
- Fig 11: is a detail enlargement of a slot shown in the encircled area XI in Fig 8, with bolt shafts of two bolts shown in cross-section and with a sliding member received in the slot.

### DETAILED DESCRIPTION OF EMBODIMENTS OF THE INVENTION

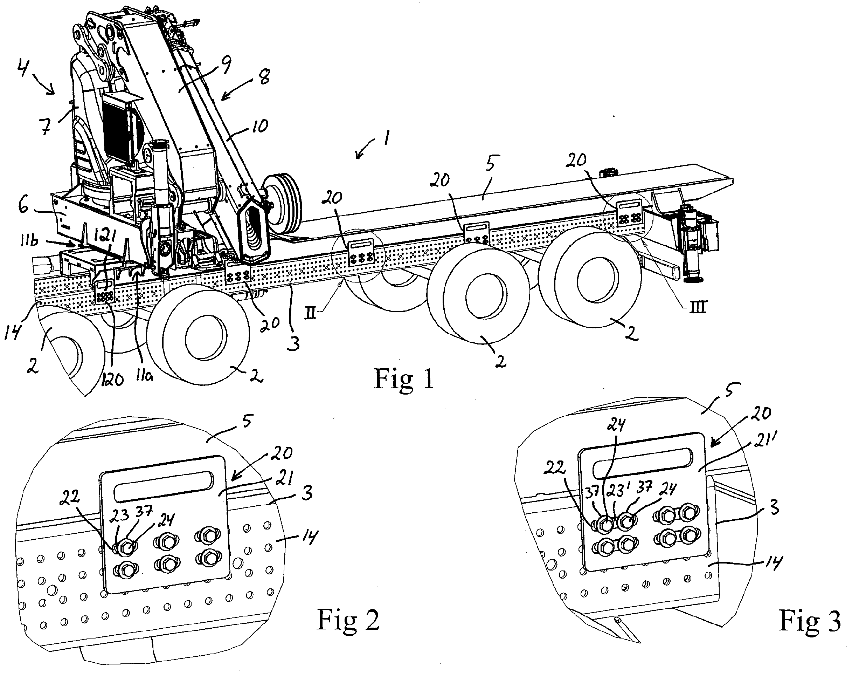

Fig 1 schematically illustrates a rear part of a lorry 1. For the sake of clarity, several components of the lorry 1 are omitted in Fig 1, such as for instance the driver's cabin, the lorry platform and the components of the driveline. The lorry 1 is provided with vehicle wheels 2 and a chassis 3 supported by the vehicle wheels. The lorry 1 is also provided with a loader crane 4, which is mounted to the chassis 3 through a subframe 5. The subframe 5 is mounted to the chassis 3 behind the driver's cabin.

The loader crane 4 is a hydraulic crane of conventional type and comprises:
- a crane base 6, through which the loader crane rests on the subframe 5;
- a column 7, which is rotatably mounted to the crane base 6 so as to be rotatable in relation to the crane base about an essentially vertical axis of rotation; and
- a crane boom system 8 comprising a number of crane booms 9, 10 which are articulately connected to each other, wherein an inner one 9 of these crane booms is articulately mounted to the column 7.
The column 7 and the crane booms 9, 10 are hydraulically actuated.

In the illustrated embodiment, the crane base 6 is secured to the subframe 5 by a non-yielding first bolted joint 11a and a non-yielding second bolted joint 11b. The first and second bolted joints 11a, 11b are arranged on opposite sides of the subframe 5 and configured to form a stiff connection between the crane base 6 and the subframe 5. As an alternative, the crane base 6 may be secured to the subframe 5 by welding or in any other suitable manner.

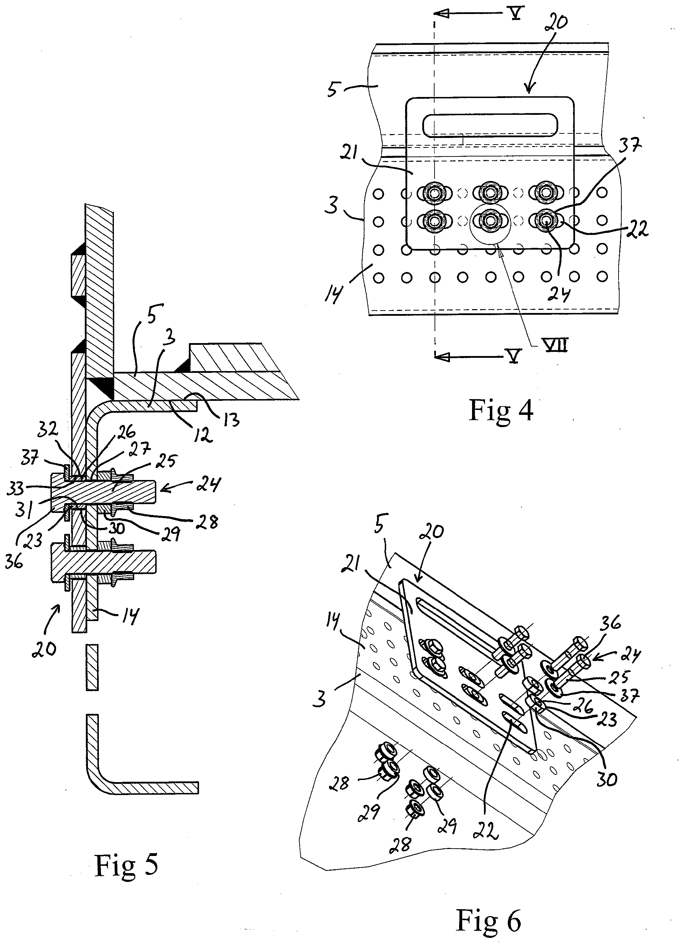

The subframe 5 has a bottom surface 12 (see Fig 5) which rests against an upper surface 13 of the chassis 3. The subframe 5 is secured to the chassis 3 by means of several shear-yielding connecting elements 20 which are arranged on either side of a longitudinal centre axis of the subframe 5 and configured to form a flexible connection between the subframe 5 and the chassis 3. In the illustrated example, four shear-yielding connecting elements 20 are arranged on each longitudinal side of the subframe 5, but the number of connecting elements 20 on each longitudinal side of the subframe may be fewer as well as more than that. In the illustrated example, one non-yielding connecting element 120 is also arranged on each longitudinal side of the subframe 5 in order to define a fixed point of attachment between the subframe 5 and the chassis 3 and prevent unwanted movements between the subframe and the chassis.

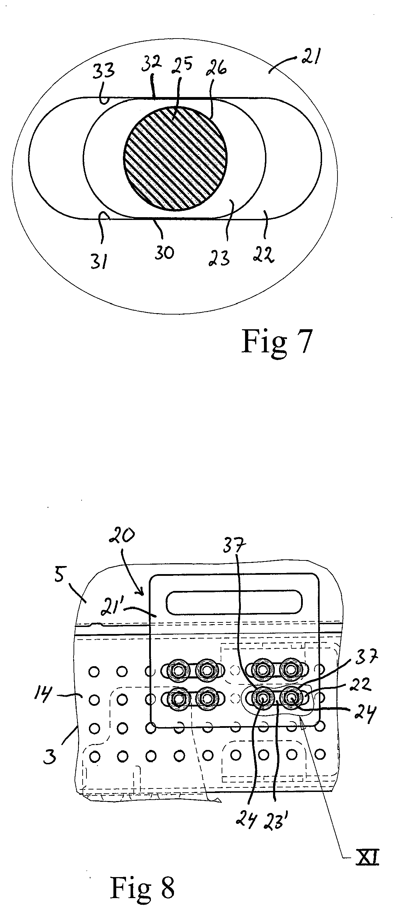

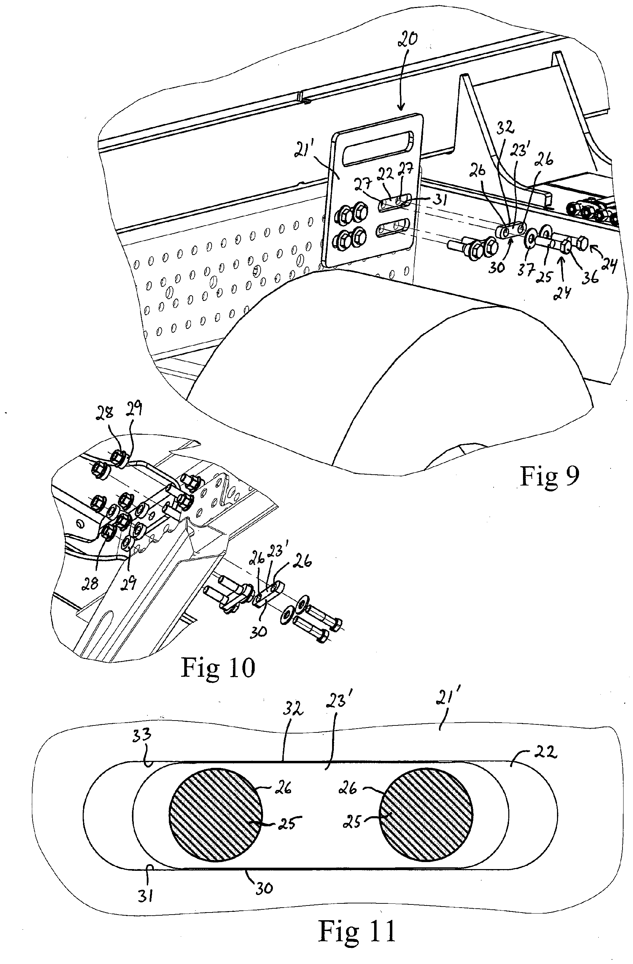

Each one of said shear-yielding connecting elements 20 comprises an attachment plate 21, 21', which is rigidly fixed to the subframe 3, preferably by welding, and projects downwardly therefrom. The attachment plate 21. 21' overlaps a part of a vertical and longitudinal side wall 14 of the chassis 3 and is provided with at least one elongated slide slot 22 and an associated sliding member 23, 23' received therein, wherein the slide slot 22 extends in the longitudinal direction of the subframe 5. The sliding member 23, 23' is shorter than the associated slide slot 22 as seen in the longitudinal direction of the slide slot 22, as clearly illustrated in Figs 7 and 11, to thereby allow a relative movement between the sliding member 23, 23' and the slide slot 22 in the longitudinal direction of the slide slot 22. The sliding member 23, 23' is fixed to the chassis 3 by means of at least one bolt 24, which has a bolt shaft 25 extending through a non-threaded bolt hole 26 in the sliding member 23, 23' and through a corresponding non-threaded bolt hole 27 in the side wall 14 of the chassis 3, as illustrated in Fig 5. Said bolt holes 26, 27 have the form of cylindrical through holes extending across the sliding member 23, 23' and said side wall 14, respectively. The part of the bolt shaft 25 received in the bolt holes 26, 27 is non-threaded and cylindrical and has a smooth envelop surface, wherein the diameter of this part of the bolt shaft 25 essentially corresponds to the diameter of the through holes 26, 27 so as to provide a close fit between the envelop surface of this part of the bolt shaft and the inner surface of the bolt holes. The bolt 24 is fixed to the sliding member 23, 23' and the side wall 14 of the chassis 3 by means of a nut 28 engaged with an external thread at the end of the bolt shaft 25. In the illustrated embodiment, a spacer sleeve 29 is provided between the nut 28 and the side wall 14 of the chassis, as illustrated in Fig 5. The bolt shaft 25 extends through an axial through hole of this spacer sleeve 29.

Each sliding member 23 of the connecting element 20 illustrated in Figs 2 and 4-7 is fixed to the side wall 14 of the chassis 3 by means of only one bolt 24, whereas each sliding member 23' of the connecting element 20 illustrated in Figs 3 and 8-11 is fixed to the side wall 14 of the chassis 3 by means of two bolts 24 which are arranged at a distance from each other as seen in the longitudinal direction of the sliding member 23', wherein the bolt shaft 25 of each one of these two bolts 24 extends through an associated bolt hole 26 in the sliding member 23' and through a corresponding bolt hole 27 in the side wall 14 of the chassis. If a sliding member of larger size is used, the sliding member could of course be fixed to the side wall 14 of the chassis 3 by means of more than two bolts 24.

A longitudinal planar contact surface 30 (see Figs 5, 7 and 11) is provided on a lower longitudinal edge of the sliding member 23, 23', wherein this contact surface 30 faces and is in sliding contact with a corresponding longitudinal planar contact surface 31 on a lower longitudinal edge of the associated slide slot 22 to thereby allow the subframe 5 to slide longitudinally in relation to the chassis 3 and at the same time prevent a relative movement between the subframe 5 and the chassis 3 vertically so as to always keep the bottom surface 12 of the subframe 5 in contact with the upper surface 13 of the chassis 3. Thus, the connecting elements 20 between the subframe 5 and the chassis 3 will force the subframe 5 and the chassis 3 to bend jointly with the same shape of deformation when the subframe 5 is subjected to bending moments from the load acting on the subframe. The connecting elements 20 will at the same time allow the subframe 5 and the chassis 3 to move somewhat in relation to each other in the longitudinal direction at the interface between the subframe 5 and the chassis 3 when the subframe 5 is subjected to bending moments from the load acting on the subframe.

A longitudinal planar contact surface 32 (see Figs 5, 7 and 11) may also be provided on an upper longitudinal edge of the sliding member 23, 23', wherein this contact surface 32 faces a corresponding longitudinal planar contact surface 33 on an upper longitudinal edge of the associated slide slot 22.

The sliding member 23, 23' has a first side which abuts against the adjacent side wall 14 of the chassis 3 and an opposite second side which abuts against the bolt head 36 of the bolt 24 or against a washer 37 provided between the bolt head 36 and the second side of the sliding member. The sliding member 23, 23' has a thickness which is larger than the thickness of the attachment plate 21, 21' to thereby provide a clearance between the washer 37 and the attachment plate 21, 21', and allow the attachment plate to move in relation to the bolt 24, the sliding member 23, 23' and the chassis 3.

The attachment plates 21, 21' may be provided with any suitable number of slide slots 22 with associated sliding members 23, 23'. Each attachment plate 21 of the connecting element 20 illustrated in Figs 2 and 4-7 comprises six slide slots 22 with associated sliding members 23, wherein three slide slots 22 are arranged in series with each other in a first row and the other three slide slots 22 are arranged in series with each other in a second row below the first row. Each attachment plate 21' of the connecting element 20 illustrated in Figs 3 and 8-11 comprises four slide slots 22 with associated sliding members 23', wherein two slide slots 22 are arranged in series with each other in a first row and the other two slide slots 22 are arranged in series with each other in a second row below the first row.

The subframe 5 and the components of the shear-yielding connecting elements 20 are of metallic material, for instance steel.

The above-mentioned non-yielding connecting element 120 lacks slide slots and sliding members and may comprise an attachment plate 121 with cylindrical bolt holes having a diameter essentially corresponding to the diameter of the bolt shafts of associated bolts.

As an alternative to a loader crane 4, the lorry 1 may comprise a MEWP platform mounted to the subframe 5.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A lorry comprising a chassis (3) and a subframe (5) mounted to the chassis (3) by means of several shear-yielding connecting elements (20) which are arranged on either side of a longitudinal centre axis of the subframe (5) and configured to form a flexible connection between the subframe (5) and the chassis (3), wherein the subframe (5) has a bottom surface (12) which rests against an upper surface (13) of the chassis (3), whereby each one of said connecting elements (20) comprises an attachment plate (21, 21'), which is rigidly fixed to the subframe (5) and overlaps a part of a vertical and longitudinal side wall (14) of the chassis (3), **characterised in:**
- **that** the attachment plate (21, 21') is provided with at least one elongated slide slot (22) and an associated sliding member (23, 23') received therein, the slide slot (22) extending in the longitudinal direction of the subframe (5);
- **that** said sliding member (23, 23') is shorter than the associated slide slot (22) as seen in the longitudinal direction of the slide slot (22), to thereby allow a relative movement between the sliding member (23, 23') and the slide slot (22) in the longitudinal direction of the slide slot (22);
- **that** said sliding member (23, 23') is fixed to the chassis (3) by means of at least one bolt (24), which has a bolt shaft (25) extending through a non-threaded bolt hole (26) in the sliding member (23, 23') and through a corresponding non-threaded bolt hole (27) in the chassis (3); and
- **that** a longitudinal planar contact surface (30) is provided on a lower longitudinal edge of said sliding member (23, 23'), wherein this contact surface (30) faces and is in sliding contact with a corresponding longitudinal planar contact surface (31) on a lower longitudinal edge of the associated slide slot (22), to thereby allow the subframe (5) to slide longitudinally in relation to the chassis (3) and at the same time prevent a relative movement between the subframe (5) and the chassis (3) vertically so as to keep the bottom surface (12) of the subframe (5) in contact with the upper surface (13) of the chassis (3).

2. A lorry according to claim 1, **characterized in that** a longitudinal planar contact surface (32) is provided on an upper longitudinal edge of said sliding member (23, 23'), wherein this contact surface (32) faces a corresponding longitudinal planar contact surface (33) on an upper longitudinal edge of the associated slide slot (22).

3. A lorry according to claim 1 or 2, **characterized in that** said sliding member (23, 23') has a first side which abuts against the adjacent side wall (14) of the chassis (3) and an opposite second side which abuts against the bolt head (36) of the bolt (24) or against a washer (37) provided between the bolt head (36) and the second side of the sliding member.

4. A lorry according to any of claims 1-3, **characterized in that** said sliding member (23, 23') has a thickness which is larger than the thickness of said attachment plate (21, 21').

5. A lorry according to any of claims 1-4, **characterized in that** the attachment plate (21, 21') of one or more of said connecting elements (20) is provided with several such slide slots (22) with associated sliding members (23, 23').

6. A lorry according to claim 5, **characterized in that** the attachment plate (21, 21') of one or more of said connecting elements (20) is provided with at least two such slide slots (22) with associated sliding members (23, 23') arranged in series with each other in a first row and at least two such slide slots (22) with associated sliding members (23, 23') arranged in series with each other in a second row below the first row.

7. A lorry according to any of claims 1-6, **characterized in that** at least one sliding member (23') of one or more of said connecting elements (20) is fixed to the chassis (3) by means of two or more bolts (24), wherein the bolt shaft (25) of each one of these bolts (24) extends through an associated bolt hole (26) in the sliding member (23') and through a corresponding bolt hole (27) in the chassis (3).

8. A lorry according to any of claims 1-7, **characterized in that** each bolt (24) is fixed to the associated sliding member (23, 23') and to the chassis (3) by means of a nut (28) engaged with an external thread on the bolt shaft (25) of the bolt.

9. A lorry according to any of claims 1-8, **characterized in that** said attachment plate (21, 21') is fixed to the subframe (5) by welding.

10. A lorry according to any of claims 1-9, **characterized in that** the lorry (1) comprises a loader crane (4) which is mounted to the subframe (5).

## Patentansprüche

1. Lastkraftwagen, der ein Fahrgestell (3) und einen Hilfsrahmen (5) umfasst, der an dem Fahrgestell (3) mittels mehrerer Scherdehnungsverbindungselemente (20) montiert ist, die auf jeder Seite einer Längsmittelachse des Hilfsrahmens (5) angeordnet sind und zur Bildung einer flexiblen Verbindung zwischen dem Hilfsrahmen (5) und dem Fahrgestell (3) ausgebildet sind, wobei der Hilfsrahmen (5) eine untere Oberfläche (12) aufweist, die an einer oberen Oberfläche (13) des Fahrgestells (3) anliegt, wobei jedes der Verbindungselemente (20) eine Befestigungsplatte (21, 21') umfasst, die starr an dem Hilfsrahmen (5) fixiert ist und einen Teil einer vertikalen und längs verlaufenden Seitenwand (14) des Fahrgestells (3) überlappt, **dadurch gekennzeichnet:**
- **dass** die Befestigungsplatte (21, 21') mit mindestens einem länglichen Gleitschlitz (22) und einem darin aufgenommenen dazugehörigen Gleitelement (23, 23') versehen ist, wobei sich der Gleitschlitz (22) in der Längsrichtung des Hilfsrahmens (5) erstreckt;
- **dass** das Gleitelement (23, 23') betrachtet in der Längsrichtung des Gleitschlitzes (22) kürzer ist als der dazugehörige Gleitschlitz (22), wodurch eine Relativbewegung zwischen dem Gleitelement (23, 23') und dem Gleitschlitz (22) in der Längsrichtung des Gleitschlitzes (22) möglich ist;
- **dass** das Gleitelement (23, 23') an dem Fahrgestell (3) mittels mindestens einer Schraube (24) fixiert ist, die einen Schraubenschaft (25) aufweist, der sich durch ein gewindeloses Schraubenloch (26) in dem Gleitelement (23, 23') und durch ein entsprechendes gewindeloses Schraubenloch (27) in dem Fahrgestell (3) erstreckt; und
- **dass** eine längs vorliegende ebene Kontaktoberfläche (30) auf einer unteren Längskante des Gleitelements (23, 23') bereitgestellt ist, wobei diese Kontaktoberfläche (30) auf eine entsprechende längs vorliegende ebene Kontaktoberfläche (31) auf einer unteren Längskante des dazugehörigen Gleitschlitzes (22) gerichtet ist und im Gleitkontakt damit ist, wodurch der Hilfsrahmen (5) in Bezug auf das Fahrgestell (3) in Längsrichtung gleiten kann, und gleichzeitig eine vertikale Relativbewegung zwischen dem Hilfsrahmen (5) und dem Fahrgestell (3) verhindert wird, so dass die untere Oberfläche (12) des Hilfsrahmens (5) mit der oberen Oberfläche (13) des Fahrgestells (3) in Kontakt ist.

2. Lastkraftwagen nach Anspruch 1, **dadurch gekennzeichnet, dass** eine längs vorliegende ebene Kontaktoberfläche (32) auf einer oberen Längskante des Gleitelements (23, 23') bereitgestellt ist, wobei diese Kontaktoberfläche (32) auf eine entsprechende längs vorliegende ebene Kontaktoberfläche (33) auf einer oberen Längskante des dazugehörigen Gleitschlitzes (22) gerichtet ist.

3. Lastkraftwagen nach Anspruch 1 oder 2, **dadurch gekennzeichnet, dass** das Gleitelement (23, 23') eine erste Seite, die an der angrenzenden Seitenwand (14) des Fahrgestells (3) anliegt, und eine gegenüberliegende zweite Seite aufweist, die an dem Schraubenkopf (36) der Schraube (24) oder an einer Unterlegscheibe (37) anliegt, die zwischen dem Schraubenkopf (36) und der zweiten Seite des Gleitelements bereitgestellt ist.

4. Lastkraftwagen nach einem der Ansprüche 1 bis 3, **dadurch gekennzeichnet, dass** das Gleitelement (23, 23') eine Dicke aufweist, die größer ist als die Dicke der Befestigungsplatte (21, 21').

5. Lastkraftwagen nach einem der Ansprüche 1 bis 4, **dadurch gekennzeichnet, dass** die Befestigungsplatte 21') von einem oder mehreren der Verbindungselemente (20) mit mehreren derartigen Gleitschlitzen (22) mit dazugehörigen Gleitelementen (23, 21') versehen ist.

6. Lastkraftwagen nach Anspruch 5, **dadurch gekennzeichnet, dass** die Befestigungsplatte (21, 21') von einem oder mehreren der Verbindungselemente (20) mit mindestens zwei solchen Gleitschlitzen (22) mit dazugehörigen Gleitelementen (23, 23') versehen ist, die in Reihe zueinander in einer ersten Reihe angeordnet sind, und wobei mindestens zwei solcher Gleitschlitze (22) mit dazugehörigen Gleitelementen (23, 23') in Reihe zueinander in einer zweiten Reihe unterhalb der ersten Reihe angeordnet sind.

7. Lastkraftwagen nach einem der Ansprüche 1 bis 6, **dadurch gekennzeichnet, dass** mindestens ein Gleitelement (23') des Verbindungselements (20) oder der mehreren Verbindungselemente (20) an dem Fahrgestell (3) mittels zwei oder mehr Schrauben (24) an dem Fahrgestell (3) fixiert ist, wobei sich der Schraubenschaft (25) jeder dieser Schrauben (24) durch ein dazugehöriges Schraubenloch (26) in dem Gleitelement (23') und durch ein entsprechendes Schraubenloch (27) in dem Fahrgestell (3) erstreckt.

8. Lastkraftwagen nach einem der Ansprüche 1 bis 7, **dadurch gekennzeichnet, dass** jede Schraube (24) mittels einer Mutter (28), die mit einem Außengewinde an dem Schraubenschaft (25) der Schraube in Eingriff ist, an dem dazugehörigen Gleitelement (23, 23') und dem Fahrgestell (3) fixiert ist.

9. Lastkraftwagen nach einem der Ansprüche 1 bis 8, **dadurch gekennzeichnet, dass** die Befestigungsplatte (21, 21') mittels Schweißen an dem Hilfsrahmen (5) fixiert worden ist.

10. Lastkraftwagen nach einem der Ansprüche 1 bis 9, **dadurch gekennzeichnet, dass** der Lastkraftwagen (1) einen Ladekran (4) umfasst, der an dem Hilfsrahmen (5) montiert ist.

## Revendications

1. Camion comprenant un châssis (3) et un sous-châssis (5) monté sur le châssis (3) au moyen de plusieurs éléments de raccordement avec complaisance de cisaillement (20) qui sont agencés de chaque côté d'un axe central longitudinal du sous-châssis (5) et configurés pour constituer un raccordement souple entre le sous-châssis (5) et le châssis (3), dans lequel le sous-châssis (5) comporte une surface inférieure (12) qui repose contre une surface supérieure (13) du châssis (3), chacun desdits éléments de raccordement (20) comprenant une plaque d'attachement (21, 21'), qui est fixée rigidement au sous-châssis (5) et chevauche une partie d'une paroi latérale verticale et longitudinale (14) du châssis (3), **caractérisé en ce que** :
- la plaque d'attachement (21, 21') est pourvue d'au moins une fente de coulissement allongée (22) et d'un organe coulissant (23, 23') associé reçu à l'intérieur de celle-ci, la fente de coulissement (22) s'étendant dans le sens longitudinal du sous-châssis (5) ;
- ledit organe coulissant (23, 23') est plus court que la fente de coulissement (22) associée en vue dans le sens longitudinal de la fente de coulissement (22), pour permettre de ce fait un mouvement relatif entre l'organe coulissant (23, 23') et la fente de coulissement (22) dans le sens longitudinal de la fente de coulissement (22) ;
- ledit organe coulissant (23, 23') est fixé au châssis (3) au moyen d'au moins un boulon (24), qui comporte un arbre de boulon (25) s'étendant à travers un trou de boulon non fileté (26) dans l'organe coulissant (23, 23') et à travers un trou de boulon non fileté (27) correspondant dans le châssis (3) ; et
- une surface de contact plane longitudinale (30) est prévue sur un bord longitudinal inférieur dudit organe coulissant (23, 23'), dans lequel cette surface de contact (30) fait face à une surface de contact plane longitudinale (31) correspondante sur un bord longitudinal inférieur de la fente de coulissement (22) associée et est en contact coulissant avec celle-ci, pour permettre de ce fait au sous-châssis (5) de coulisser longitudinalement par rapport au châssis (3) tout en empêchant un mouvement relatif entre le sous-châssis (5) et le châssis (3) verticalement de manière à maintenir la surface inférieure (12) du sous-châssis (5) en contact avec la surface supérieure (13) du châssis (3).

2. Camion selon la revendication 1, **caractérisé en ce qu'**une surface de contact plane longitudinale (32) est prévue sur un bord longitudinal supérieur dudit organe coulissant (23, 23'), dans lequel cette surface de contact (32) fait face à une surface de contact plane longitudinale (33) correspondante sur un bord longitudinal supérieur de la fente de coulissement (22) associée.

3. Camion selon la revendication 1 ou 2, **caractérisé en ce que** ledit organe coulissant (23, 23') comporte un premier côté qui vient en butée contre la paroi latérale (14) adjacente du châssis (3) et un deuxième côté opposé qui vient en butée contre la tête de boulon (36) du boulon (24) ou contre une rondelle (37) prévue entre la tête de boulon (36) et le deuxième côté de l'organe coulissant.

4. Camion selon l'une quelconque des revendications 1 à 3, **caractérisé en ce que** ledit organe coulissant (23, 23') présente une épaisseur supérieure à l'épaisseur de ladite plaque d'attachement (21, 21').

5. Camion selon l'une quelconque des revendications 1 à 4, **caractérisé en ce que** la plaque d'attachement (21, 21') de l'un ou plusieurs desdits éléments de raccordement (20) est pourvue de plusieurs dites fentes de coulissement (22) avec des organes coulissants (23, 23') associés.

6. Camion selon la revendication 5, **caractérisé en ce que** la plaque d'attachement (21, 21') d'un ou plusieurs desdits éléments de raccordement (20) est pourvue d'au moins deux dites fentes de coulissement (22) avec des organes coulissants (23, 23') associés agencés en série l'un avec l'autre dans une première rangée et d'au moins deux dites fentes de coulissement (22) avec des organes coulissants (23, 23') associés agencés en série l'un avec l'autre dans une deuxième rangée au-dessous de la première rangée.

7. Camion selon l'une quelconque des revendications 1 à 6, **caractérisé en ce qu'**au moins un organe coulissant (23') d'un ou plusieurs desdits éléments de raccordement (20) est fixé au châssis (3) au moyen d'au moins deux boulons (24), dans lequel l'arbre de boulon (25) de chacun de ces boulons (24) s'étend à travers un trou de boulon (26) associé dans l'organe coulissant (23') et à travers un trou de boulon (27) correspondant dans le châssis (3).

8. Camion selon l'une quelconque des revendications 1 à 7, **caractérisé en ce que** chaque boulon (24) est fixé à l'organe coulissant (23, 23') associé et au châssis (3) au moyen d'un écrou (28) mis en prise avec un filetage externe sur l'arbre de boulon (25) du boulon.

9. Camion selon l'une quelconque des revendications 1 à 8, **caractérisé en ce que** ladite plaque d'attachement (21, 21') est fixée au sous-châssis (5) par soudure.

10. Camion selon l'une quelconque des revendications 1 à 9, **caractérisé en ce que** le camion (1) comprend une grue de chargement (4) qui est montée sur le sous-châssis (5).
